# EUROPÄISCHE PATENTSCHRIFT

(11) **EP 1 878 593 B1**
(45) Veröffentlichungstag und Bekanntmachung des Hinweises auf die Patenterteilung: **12.08.2009**
(21) Anmeldenummer: 07108123.6
(22) Anmeldetag: 14.05.2007
(51) Int. Cl.: B60C 19/08, B29D 30/60

(54) **Verfahren zur Herstellung eines Fahrzeugluftreifens**
Method for manufacturing a pneumatic tyre for a vehicle
Procédé destiné à la fabrication d'un pneu de véhicule

(30) Priorität: 14.07.2006 DE 102006032818
(43) Veröffentlichungstag der Anmeldung: 16.01.2008
(73) Patentinhaber: Continental Aktiengesellschaft, 30165 Hannover (DE)
(72) Erfinder: Frerichs, Udo, 30855 Langenhagen (DE)

(56) Entgegenhaltungen:
- EP-A- 1 657 050
- EP-A1- 0 681 931
- EP-A1- 0 747 243
- EP-A1- 0 838 353
- EP-A2- 0 872 360
- WO-A-99/29523
- WO-A-20/05108048
- JP-A- 2005 047 445
- US-B1- 6 474 382

## Beschreibung

Die Erfindung betrifft ein Verfahren zur Herstellung eines Fahrzeugluftreifens mit einem einteiligen oder einem eine Laufstreifencap und eine Laufstreifenbase (3) aufweisenden Laufstreifen, wobei der Laufstreifen bzw. die Laufetreifencap durch Spulen zumindest eines Materialstreifens aus einer elektrisch nicht leitfähigen Kautschukmischung hergestellt wird, und wobei zumindest ein im Laufstreifen oder in der Laufstreifencap eingebrachter Profilstreifen aus einer elektrisch leitfähigen Kautschukmischung zwischen der Außenseite des Laufstreifens bzw. der Laufstreifencap und dem unterhalb des Laufstreifens bzw. der Laufstreifencap befindlichen, aus einer elektrisch leitfähigen Kautschukmischung gefertigten Unterbau eine elektrisch leitfähige Verbindung herstellt.

Da sich Fahrzeuge während des Fahrbetriebes elektrisch aufladen, ist für eine ausreichende Ableitung der elektrostatischen Ladungen Sorge zu tragen. Die mit der Fahrbahn in Kontakt stehenden Aufstandsflächen der Reifen müssen daher ausreichend leitfähig sein. Ist dies nicht der Fall, können unangenehme Entladungsvorgänge auftreten. Insbesondere bei kieselsäurehaltigen Laufstreifen, die den Reifen an sich gute Fahreigenschaften, wie einen geringen Rollwiderstand und gute Nass-Rutsch-Eigenschaften verleihen, ist deren niedrige elektrische Leitfähigkeit eine mischungsbedingte und nachteilige Eigenschaft.

Ein Verfahren der eingangs genannten Art ist aus der EP 1 657 050 A1 bekannt. Der Laufstreifen wird durch spiraliges Spulen von Materialstreifen aus unterschiedlichen Kautschukmischungen erstellt. Der Großteil des Laufstreifens wird aus einem Materialstreifen aus einer nicht leitfähigen Kautschukmischung mittels einer ersten Auftragsvorrichtung aufgebracht. Eine zweite Auftragsvorrichtung bringt einen Materialstreifen aus einer leitfähigen Kautschukmisehung auf. In einem bestimmten Bereich des Laufstreifens werden diese beiden Materialstreifen simultan gewickelt, derart, dass höchstens fünf Wicklungen aus dem leitfähigen Kautschukstreifen gebildet werden. Der leitfähige Kautschukstreifen bildet somit eine leitfähige Strecke, die vom Unterbau zum Außenumfang des Laufstreifens durchgehend ist. Aus der WO 2005/108 048 A1 sind ein Verfahren und eine Vorrichtung zum Erstellen eines Laufstreifens durch spiraliges Wickeln von Materialstreifen aus unterschiedlichen Kautschukmischungen bekannt, durch welches Abschnitte im Laufstreifen aus einem Materialstreifen mit einer geringen elektrischen Leitfähigkeit und Abschnitte aus einem Materialstreifen mit einer höheren elektrischen Leitfähigkeit spiralig gewickelt werden.

Bei dem aus der US 6,834,693 B1 bekannten Verfahren wird der Laufstreifen mit einer Extrusionsvorrichtung hergestellt, welche einen den kompletten Laufstreifen erzeugenden Hauptextruder und einen mit diesem zusammenarbeitenden Mikroextruder aufweist, der eine elektrisch leitfähige Kautschukmischung direkt lokal in einen Abschnitt der unvulkanisierten und heißen Kautschukmischung, welche aus dem Hauptextruder kommt, einfügt. Der fertige Reifen weist daher im Laufstreifen einen in Umfangsrichtung verlaufenden Einsatz aus elektrisch leitfähigem Gummi auf.

Aus der US 6,951,233 B1 ist ein Verfahren zur Herstellung eines Laufstreifens aus einer Laufstreifencap und einer Laufstreifenbase bekannt, welche beide aus einer nicht leitenden Kautschukmischung hergestellt werden. Die Laufstreifenbase und die Laufstreifencap werden jeweils separat mit einem Hauptextruder hergestellt, wobei in jede dieser Kautschukmischungen in Umfangsrichtung und lokal begrenzt durch Co-Extrusion eine elektrisch leitende Kautschukmischung eingefügt wird. Bei beiden aus dem Stand der Technik bekannten Verfahren erfolgt daher ein Einfügen elektrisch leitfähiger Inserts in den Laufstreifen bzw. in die Laufstreifencap und -base während der Extrusion des Laufstreifens bzw. der Laufstreifenteile. Diese bekannten Verfahren lassen sich bei Laufstreifen, die durch Spulen eines Materialstreifens aus einer Kautschukmischung hergestellt werden, nicht anwenden.

Der Erfindung liegt die Aufgabe zu Grunde, auf einfache Weise in einen durch Spulen eines Materialstreifens hergestellten Laufstreifen bzw. eine derart hergestellte Laufstreifencap aus einer elektrisch nicht leitfähigen Kautschukmischung zumindest ein Insert aus einer elektrisch leitfähigen Kautschukmischung einbringen zu können,

Gelöst wird die gestellte Aufgabe erfingdungsgemäß dadurch, dass der Profilstreifen oder Profilstreifenabschnitt aus der elektrisch leitfähigen Kautschukmischung vor dem Spulvorgang auf dem elektrisch leitfähigen Unterbau positioniert wird, wobei der Profilstreifen so lange an seiner einen Seite mit einem Stützelement abgestützt wird, bis auf seiner anderen Seite der hier vorgesehene Teil des Laufstreifen bzw. der Laufstreifencap gespult ist.

Gemäß der Erfindung werden die späteren Inserts aus einer elektrisch leitfähigen Kautschukmischung als profilierte Streifen bereits vor dem Spulvorgang oder vor dem Fertigstellen des Laufstreifens bzw. der Laufstreifencap angebracht Die Erfindung erfordert daher keinen Eingriff in den zum Spulen vorgesehenen Materialstreifen.

Gemäß einer bevorzugten Ausführungsform der Erfindung ist der Profilstreifen bereits vorgeformt und vorzugsweise auch vorvernetzt. Diese Maßnahmen erlauben eine besonders gute Abstimmung mit dem nachfolgenden Spulvorgang zum Bilden der Laufstreifencap und ist auch für ein exaktes Positionieren des Profilstreifen von Vorteil.

Es ist ferner günstig, den beispielsweise auf der Laufstreifenbase bereits aufgelegten Profilstreifen einseitig in Position zu halten, bis auf seiner anderen Seite der hier verlaufende Abschnitt der Laufstreifencap fertig gespult ist. Geeignet ist ein beispielsweise metallisches Stützelement, welches auch der Form des Profilstreifens entsprechend ausgeführt ist.

Bei einer alternativen Ausführungsvariante der Erfindung wird der Profilstreifen zwischen zwei in Umfangsrichtung auf dem Unterbau positionierten Formteilen durch Einbringen einer fließfähigen Kautschukmischung hergestellt und anschließend der Laufstreifen bzw. die Laufstreifencap gespult. Die vorzugsweise heiße Kautschukmischung wird durch Abkühlen formstabil, sodass dann einer der Formteile entfernt werden kann und der diesem benachbarte Abschnitt des Laufstreifens oder der Laufstreifencap gespult werden kann. Nach dem Entfernen des zweiten Formringes kann dann der zweite Abschnitt des Laufstreifens oder der Laufstreifencap durch Spulen eines Mischungsstreifens fertig gestellt werden.

Bei dieser Ausführungsvariante ist es von Vorteil, wenn der Profilstreifen in Umfangsrichtung segmentweise hergestellt wird, sodass das fließfähige Material in diesen Abschnitten sukzessive die erforderliche Formstabilität annehmen kann.

Die Profilstreifen können unterschiedliche Querschnittsformen aufweisen, beispielsweise einen dreieckigen, rechteckigen, trapezförmigen oder U-, V- oder W-förmigen Querschnitt. Profilstreifen mit solchen Querschnitte lassen sich auch aus einer fließfähigen Kautschukmischung herstellen. Die Querschnittsform wird vorteilhafterweise gemäß der vorgesehenen Profilierung des Laufstreifens gewählt.

Eine Anpassung an die Profilierung ist vor Allem dann möglich, wenn über den Reifenumfang mehrere Profilstreifenabschnitte, in axialer Richtung und in Umfangsrichtung gegeneinander versetzt, positioniert werden.

Profilstreifen, die vorgeformt und vorzugsweise auch vorvernetzt sind, können auch aus mehreren Mischungsschichten unterschiedlicher Farben bestehen, die im fertigen Reifen in axialer oder auch in radialer Richtung verlaufen können. Der bzw. die Profilstreifen kann bzw. können daher auch als Treadwearindikatoren (TWI) eingesetzt werden. Als Treadwearindikator kann dabei auch ein sich farblich abhebender Streifen, welcher im Profilstreifen eingesetzt ist, vorgesehen sein.

Des Weiteren ist es möglich, im Profilstreifen zumindest eine Antenne einzulegen.

Weitere Merkmale, Vorteile und Einzelheiten der Erfindung werden anhand der Zeichnung, die schematisch mehrere Ausführungsbeispiele darstellt, näher beschrieben. Dabei zeigen
Fig. 1 eine Ansicht eines Abschnittes eines Laufstreifens mit einer Ausführungsvariante der Erfindung,
Fig. 2 eine weitere Ausführungsvariante der Erfindung anhand einer Ansicht eines Abschnittes und eines Laufstreifens und
Fig. 3a und 3b Ansichten einer weiteren Ausführungsvariante der Erfindung.

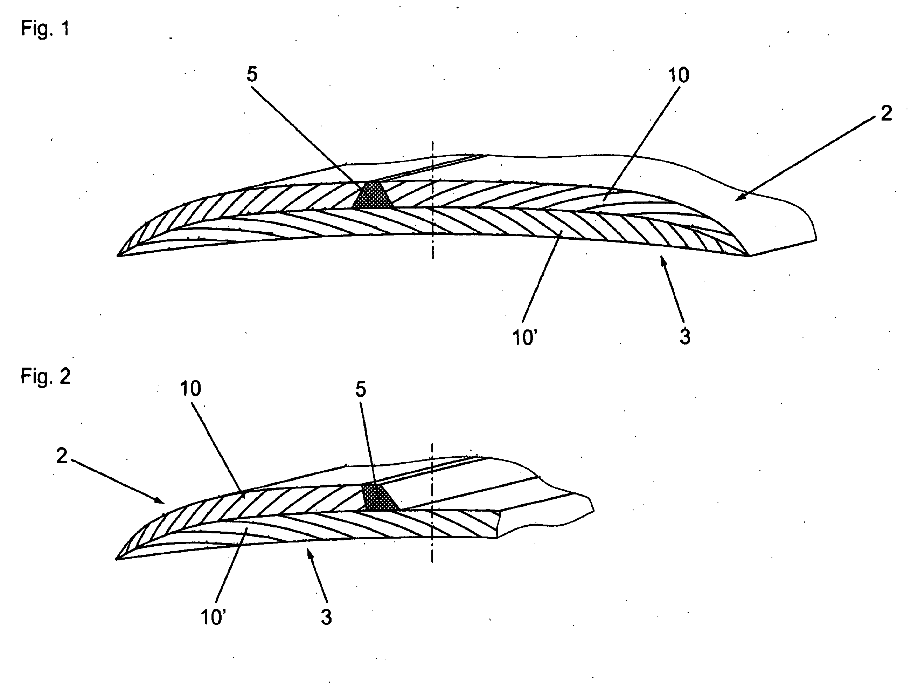

Bei der in Fig. 1 gezeigten Ausführungsvariante wird ein Laufstreifen hergestellt, welcher aus einer Laufstreifencap 2 und einer Laufstreifenbase 3 besteht, die unmittelbar auf das nicht dargestellte Gürtelpaket oder eine nicht gezeigte, das Gürtelpaket abdeckende Bandage eines Fahrzeugluftreifens aufgebracht wird. Sowohl Laufstreifencap 2 als auch Laufstreifenbase 3 werden durch spiraliges Wickeln, durch sogenanntens "Spulen", eines Materialstreifens 10, 10' aus einer Kautschukmischung hergestellt. Der Materialstreifen 10 für die Laufstreifencap 2 besteht aus einer Silikamischung, einer Kautschukmischung, welche als Füllstoff Kieselsäure (Silika) und keinen oder höchstens einen sehr geringen Anteil an Ruß enthält. Die Laufstreifenbase 3 wird aus einem Materialstreifen 10' erstellt, welcher aus einer elektrisch leitfähigen, Ruß enthaltenden Kautschukmischung besteht. Dabei kann eine der üblichen und bekannten Basemischungen verwendet werden. Auf die bereits fertig gestellte und durch Spulen des Materialstreifens 10' hergestellte Laufstreifenbase 3 wird gemäß der in Fig. 1 gezeigten Ausführungsform der Erfindung über den Umfang ein Profilstreifen 5 aus einer elektrisch leitfähigen, insbesondere Ruß enthaltenden Kautschukmischung aufgebracht. Wie Fig. 1 zeigt kann der Profilstreifen 5, der hier einen etwa dreieckigen Querschnitt aufweist, als über den Umfang durchgehender geschlossener Ring erstellt werden. Alternativ dazu können mehrere Profilstreifenabschnitte, in axialer Richtung gegeneinander versetzt und jeweils über einen Teil des Umfanges verlaufend, vorgesehen sein. Der Profilstreifen 5 kann aus einer vorvernetzten Kautschukmischung bestehen, sodass er zwar noch klebrig und somit konfektionsfähig ist, aber bereits eine höhere Formstabilität aufweist. Der Profilstreifen 5 kann auch als extrudierter und durch die Form der Extrusionsdüse vorgeformter Mischungsstrang erstellt und über den Umfang der Laufstreifenbase 3 ringförmig umlaufend aufgelegt werden.

Der Profilstreifen 5 kann andere Querschnittsformen aufweisen, beispielsweise einen rechteckigen oder trapezförmigen Querschnitt, er kann jedoch auch U-, V- oder W-förmig mit entsprechenden Schenkeln bzw. Abschnitten ausgeführt sein. Der Profilstreifen 5 kann ferner aus unterschiedlich farbig ausgeführten Schichten bestehen oder zumindest einen farbigen (nicht schwarzen) Streifen beinhalten und derart die Funktion eines Treadwearindikators (TWI) erfüllen. Die Schichten können im fertigen Reifen in radialer oder in axialer Richtung orientiert sein. In den Profilstreifen 5 kann zumindest eine Antenne eingelegt werden. Der Profilstreifen 5 kann ferner aus aneinander anschließenden Teilabschnitten erstellt werden.

Der auf der Laufstreifenbase 3 positionierte Profilstreifen 5 kann an der einen Seite mit einem Stützelement, beispielsweise einem umlaufenden Stützring, in Position gehalten werden, bis auf seiner anderen Seite der dort befindliche Abschnitt der Laufstreifencap 2 durch Spulen des Materialstreifens fertig gestellt ist.

Fig. 2 zeigt eine weitere Ausführungsvariante der Erfindung, bei der auf die bereits fertig gespulte Laufstreifenbase 3, beginnend bei der einen seitlichen Schulter, in Umfangsrichtung ein Teil der Laufstreifencap 2, beispielsweise die eine Hälfte der Laufstreifencap 2, durch Spulen eines Materialstreifens 10 erstellt wird. Anschließend wird unmittelbar an den bereits gespulten Abschnitt der Laufstreifencap 2 ein Profilstreifen 5 aus einer elektrisch leitfähigen Kautschukmischung positioniert, welcher profiliert und vorzugsweise bereits vorvernetzt ist. Dann wird auf der anderen Seite des Profilstreifens 5 die Laufstreifencap 2 durch spiraliges Wickeln des Materialstreifens 10 fertig gestellt.

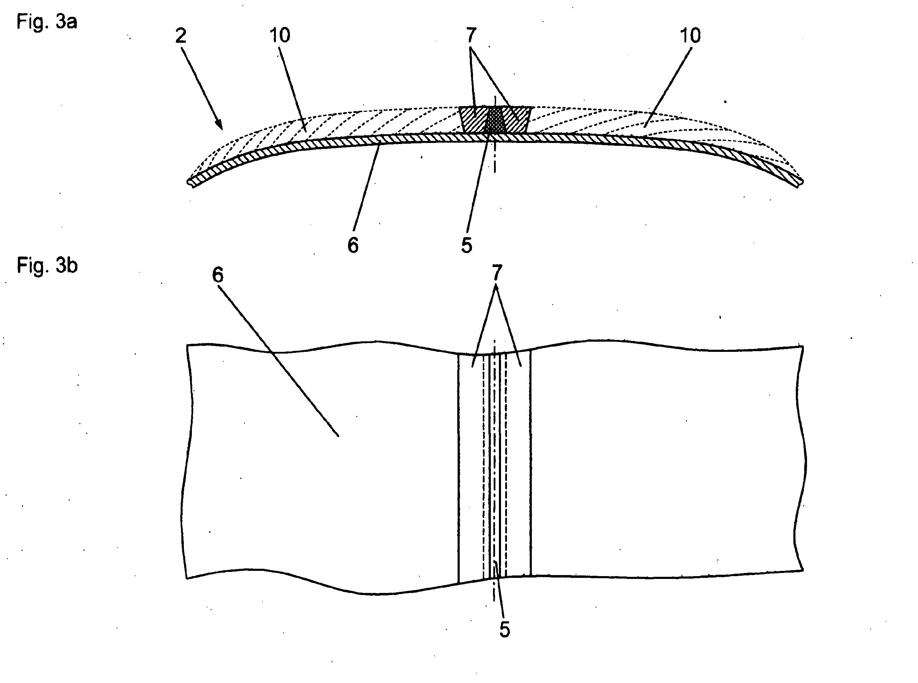

Bei der in Fig. 3a und 3b gezeigten Ausführungsvariante ist vorgesehen, dass der Laufstreifen als Monolaufstreifen 2' direkt auf das Gürtelpaket 6 durch umlaufendes Spulen eines Materialstreifens 10 aus einer nicht leitfähigen Kautschukmischung erstellt wird. Die Gürtelgummierung hingegen besteht aus einer Ruß enthaltenden und daher elektrisch leitfähigen Mischung. Mit zwei Formringen 7, die unter einem gegenseitigen Abstand in Reifenumfangsrichtung auf dem Gürtel 6 positioniert werden und in Umfangsrichtung gegebenenfalls aus mehreren Segmenten bestehen können, wird eine in Reifenumfangsrichtung umlaufende Rinne 8 gebildet, welche mit einer elektrisch leitfähigen Kautschukmischung, die entsprechend fließfähig ist, ausgegossen bzw. ausgespritzt wird. Sobald die eingebrachte Kautschukmischung entsprechend formstabil ist wird zumindest einer der Formringe 7 entfernt und der diesem benachbarte Abschnitt der Laufstreifencap 2' gespult. Der zweite Ring 7 bleibt bevorzugt noch in Position. Nach dem Entfernen des zweiten Formringes 7 kann der zweite noch fehlende Abschnitt der Laufstreifencap 2 durch Spulen des Mischungsstreifens 10 fertig gestellt werden.

Das Einbringen der fließfähigen Kautschukmischung erfolgt bei drehendem Rohreifen. Dabei kann es von Vorteil sein, das Kautschukmischungsmaterial über den Umfang des Reifens in Teilabschnitten einzubringen und innerhalb der Formringe 7 Umfangsabschnitte zu bilden, die beidseitig geschlossen sind. Dabei können diese Umfangabschnitte durch ein- und ausfahrbare Schotts gebildet werden, die ein Überfließen der eingebrachten Kautschukmischung in Umfangsrichtung verhindern.

Auch bei dieser Ausführungsvariante ist es möglich, zwischen den beiden Formringen 7 gebildeten Profilstreifen in unterschiedlichen Querschnittsformen, wie beschrieben, herzustellen.

## Patentansprüche

1. Verfahren zur Herstellung eines Fahrzeugluftreifens mit einem einteiligen oder einem eine Laufstreifencap (2) und eine Laufstreifenbase (3) aufweisenden Laufstreifen, wobei der Laufstreifen (2') bzw, die Laufstreifencap (2) durch Spulen zumindest eines Materialstreifens (10,10') aus einer elektrisch nicht leitfähigen Kautschukmischung hergestellt wird, und wobei zumindest ein im Laufstreifen (2') oder in der Laufstreifencap (3) eingebrachter Profilstreifen (5) aus einer elektrisch leitfähigen Kautschukmischung zwischen der Außenseite des Laufstreifens (2') bzw. der Laufstreifencap (3) und dem unterhalb des Laufstreifens (2') bzw. der Laufstreifencap (3) befindlichen, aus einer elektrisch leitfähigen Kautschukmischung gefertigten Unterbau eine elektrisch leitfähig Verbindung herstellt,
**dadurch gekennzeichnet,**
**dass** der Profilstreifen (5) oder Profilstreifenabschnitt aus der elektrisch leitfähigen Kautschukmischung vor dem Spulvorgang auf dem elektrisch leitfähigen Unterbau positioniert wird, wobei der Profilstreifen (5) so lange an seiner einen Seite mit einem Stützelement abgestützt wird, bis auf seiner anderen Seite der hier vorgesehene Teil des Laufstreifen (2') bzw. der Laufetreifencap (2) gespult ist.

2. Verfahren nach Anspruch 1, **dadurch gekennzeichnet, dass** der bzw. die Profilstreifen (5) vorgeformt und vorzugsweise vorvernetzt ist bzw. sind.

3. Verfahren nach Anspruch 1 oder 2, **dadurch gekennzeichnet, dass** der Profilstreifen (5) zwischen zwei in Umfangsrichtung auf dem Unterbau positionierten
Formteilen (7) durch Einbringen einer fließfähigen Kautschukmischung hergestellt wird und anschließend der Laufstreifen (2') bzw. die Laufsbreifencap (2) gespult wird.

4. Verfahren nach Anspruch 1 oder 3, **dadurch gekennzeichnet, dass** einer der Formteile (7) auf der einen Seite des Profilstreifens (3) als Stützelement positioniert bleibt, bis auf der anderen Seite des Profilstreifens (3) der hier vorgesehene Teil des Laufstreifens (2') bzw. der Laufstreifencap (2) gespult ist.

5. Verfahren nach Anspruch 3 oder 4, **dadurch gekennzeichnet, dass** der
Profilstreifen (5) in Umfangsrichtung segmentweise hergestellt wird.

6. Verfahren nach einem der Ansprüche 1 bis 5, **dadurch gekennzeichnet, dass** der bzw. die Profilstreifen (5) einen dreieckigen, rechteckigen, trapezförmigen oder U-, V- oder W-förmigen Querschnitt aufweist bzw. aufweisen.

7. Verfahren nach einem der Ansprüche 1 bis 3 oder 6, **dadurch gekennzeichnet, dass** mehrere Profilstreifenabschnitte, in axialer Richtung und in Umfangsrichtung gegeneinander versetzt, positioniert werden.

8. Verfahren nach einem der Ansprüche 1 bis 3, 6 oder 7, **dadurch gekennzeichnet, dass** der oder die Profilstreifen (5) aus Mischungsschichten unterschiedlicher Farben besteht bzw. bestehen, die im fertigen Reifen in axialer Richtung oder in radialer Richtung verlaufen.

9. Verfahren nach einem der Ansprüche 1 bis 8, **dadurch gekennzeichnet, dass** der bzw. die Profilstreifen (5) zumindest einen sich farblich abhebenden streifenförmigen Einsatz enthält bzw. enthalten.

10. Verfahren nach einem der Ansprüche 1 bis 9, **dadurch gekennzeichnet, dass** im Profilstreifen (5) eine Antenne eingelegt ist.

## Claims

1. Method for manufacturing a vehicle pneumatic tyre having a single-component tread or which has a tread cap (2) and a tread base (3), wherein the tread (2') or the tread cap (2) is manufactured by wrapping at least one material strip (10, 10') made of an electrically non-conductive rubber mixture, and wherein at least one profile strip (5) which is introduced in the tread (2') or in the tread cap (3) and is made of an electrically conductive rubber mixture produces an electrical conductive connection between the outside of the tread (2') or the tread cap (3) and the substructure which is located underneath the tread (2') or the tread cap (3) and is fabricated from an electrically conductive rubber mixture,
**characterized**
**in that** the profile strip (5) or profile strip section composed of the electrically conductive rubber mixture is positioned on the electrically conductive substructure before the wrapping process, wherein the profile strip (5) is supported on one of its sides by a supporting element while, on its other side, the part of the tread (2') or the tread cap (2) which is provided here is wrapped.

2. Method according to Claim 1, **characterized in that** the profile strip (5) or profile strips (5) is/are preshaped and preferably precrosslinked.

3. Method according to Claim 1 or 2, **characterized in that** the profile strip (5) is manufactured by introducing a fluid rubber mixture between two mould components (7) positioned in the circumferential direction on the substructure, and the tread (2') or the tread cap (2) is subsequently wrapped.

4. Method according to Claim 1 or 3, **characterized in that** one of the mould components (7) remains positioned on one side of the profile strip (3) as a supporting element while, on the other side of the profile strip (3), the part of the tread (2') or tread cap (2) which is provided there is wrapped.

5. Method according to Claim 3 or 4, **characterized in that** the profile strip (5) is manufactured segment by segment in the circumferential direction.

6. Method according to one of Claims 1 to 5,
**characterized in that** the profile strip or profile strips (5) has/have a triangular, rectangular, trapezoidal or U-shaped, V-shaped or W-shaped cross section.

7. Method according to one of Claims 1 to 3 or 6, **characterized in that** a plurality of profile strip sections are positioned offset with respect to one another in the axial direction and in the circumferential direction.

8. Method according to one of Claims 1 to 3, 6 or 7, **characterized in that** the profile strip or profile strips (5) is/are composed of mixture layers of different colours which run in the axial direction or in the radial direction in the finished tyre.

9. Method according to one of Claims 1 to 8,
**characterized in that** the profile strip or profile strips (5) contains/contain at least one strip-shaped insert of a contrasting colour.

10. Method according to one of Claims 1 to 9,
**characterized in that** an antenna is integrated into the profile strip (5).

## Revendications

1. Procédé de fabrication d'un bandage pneumatique pour véhicule qui présente une bande de roulement d'une seule pièce ou un chapeau (2) de bande de roulement et une base (3) de bande de roulement, la bande de roulement (2') ou le chapeau (2) de bande de roulement étant fabriqués par bobinage d'au moins une bande (10, 10') de matériau à base d'un mélange de caoutchouc électriquement non conducteur, au moins une bande profilée (5) placée dans la bande de roulement (2') ou dans le chapeau (3) de bande de roulement étant constituée d'un mélange de caoutchouc électriquement conducteur, disposée entre le côté extérieur de la bande de roulement (2') ou du chapeau (3) de bande de roulement et la sous-structure située en dessous de la bande de roulement (2') ou du chapeau (3) de la bande de roulement et réalisée en un mélange de caoutchouc électriquement conducteur établissant une liaison électriquement conductrice,
**caractérisé en ce que**
la bande profilée (5) ou le tronçon de bande profilée en mélange de caoutchouc électriquement conducteur sont placés sur la sous-structure électriquement conductrice avant l'opération de bobinage, la bande profilée (5) étant soutenue sur un côté par un élément de soutien jusqu'à ce que la partie de la bande de roulement (2') ou du chapeau (2) de bande de roulement prévue sur son autre côté ait été bobinée.

2. Procédé selon la revendication 1, **caractérisé en ce que** la ou les bandes profilées (5) sont préformées et de préférence préréticulées.

3. Procédé selon les revendications 1 ou 2,
**caractérisé en ce que** la bande profilée (5) est formée entre deux pièces moulées (7) placées sur la sous-structure dans le sens de la périphérie par apport d'un mélange fluide de caoutchouc, la bande de roulement (2') ou le chapeau (2) de bande de roulement étant ensuite bobinés.

4. Procédé selon les revendications 1 ou 3,
**caractérisé en ce que** l'une des pièces moulées (7) reste placée comme élément de soutien sur un côté de la bande profilée (3) jusqu'à ce que la partie de la bande de roulement (2') ou du chapeau de bande de roulement (2) prévue en cet endroit ait été bobinée sur l'autre côté de la bande profilée (3).

5. Procédé selon les revendications 3 ou 4,
**caractérisé en ce que** la bande profilée (5) est fabriquée par segments dans le sens de la périphérie.

6. Procédé selon l'une des revendications 1 à 5, **caractérisé en ce que** la ou les bandes profilées (5) ont une section transversale triangulaire, rectangulaire, trapézoïdale ou en forme de U, de V ou de W.

7. Procédé selon l'une des revendications 1 à 3 ou 6, **caractérisé en ce que** plusieurs tronçons de bande profilée sont placés dans la direction axiale et en décalage mutuel dans le sens de la périphérie.

8. Procédé selon l'une des revendications 1 à 3, 6 ou 7, **caractérisé en ce que** la ou les bandes profilées (5) sont constituées de couches de mélange de différentes couleurs qui, dans le bandage terminé, s'étendent dans la direction axiale ou dans la direction radiale.

9. Procédé selon l'une des revendications 1 à 8, **caractérisé en ce que** la ou les bandes profilées (5) contiennent au moins une garniture en forme de bande qui ressort chromatiquement.

10. Procédé selon l'une des revendications 1 à 9, **caractérisé en ce qu'**une antenne est placée dans la bande profilée (5).
